## Europäisches Patentamt

## European Patent Office

## Office européen des brevets

(19)

(11) EP 0 742 809 B1

(12) **FASCICULE DE BREVET EUROPEEN**

(45) Date de publication et mention
de la délivrance du brevet:
**08.08.2001 Bulletin 2001/32**

(21) Numéro de dépôt: **95941751.0**

(22) Date de dépôt: **01.12.1995**

(51) Int Cl.[7]: **C08J 5/18**, C08L 77/00

(86) Numéro de dépôt international:
**PCT/FR95/01586**

(87) Numéro de publication internationale:
**WO 96/17003 (06.06.1996 Gazette 1996/26)**

(54) **FILMS A BASE DE POLYAMIDE ET DE POLYMERES A BLOCS POLYAMIDES ET BLOCS POLYETHERS**

FILME AUS POLYAMIDE UND POLYETHERAMIDEBLOCKPOLYMERE

FILMS BASED ON POLYAMIDE AND POLY(AMIDE-ETHER) BLOCK COPOLYMERS

(84) Etats contractants désignés:
**AT BE CH DE DK ES FR GB GR IE IT LI LU NL PT SE**

(30) Priorité: **02.12.1994 FR 9414521**

(43) Date de publication de la demande:
**20.11.1996 Bulletin 1996/47**

(73) Titulaire: **Atofina**
**92800 Puteaux (FR)**

(72) Inventeurs:
• **MELOT, Denis**
**F-27300 Bernay (FR)**
• **ALEX, Patrick**
**F-91470 Limours-Pecquese (FR)**

(74) Mandataire: **Neel, Henry**
**Atofina**
**D.C.R.D./D.P.I.**
**4, Cours Michelet,**
**La Défense 10**
**92091 Paris La Défense Cedex (FR)**

(56) Documents cités:
EP-A- 0 060 579          EP-A- 0 301 234
CH-A- 655 941           FR-A- 2 592 388
US-A- 4 970 274         US-A- 5 416 171

• **DATABASE WPI Week 8817 Derwent Publications Ltd., London, GB; AN 88-116667 (17) & JP,A,63 063 748 (TOYO PLASTIC SEIKO), 22 Mars 1988**
• **DATABASE WPI Week 9251 Derwent Publications Ltd., London, GB; AN 92-419578 (51) & JP,A,04 314 741 (TORAY IND INC), 5 Novembre 1992 cité dans la demande**
• **DATABASE WPI Week 7919 Derwent Publications Ltd., London, GB; AN 79-36147B (19) & JP,A,54 041 955 (TORAY INDS INC), 3 Avril 1979**

EP 0 742 809 B1

**Description**

La présente invention concerne des films à base de polyamide et de polymères à blocs polyamides et blocs polyéthers.

L'art antérieur JP 04-314 741 décrit des films constitués d'un mélange de (i) polyamide 6 et (ii) de polyétheresteramide. Le polyétheresteramide est un polymère bloc obtenu par la condensation de polyoxytetraméthylèneglycol et de blocs polyamides à extrémités açide carboxylique. Les blocs polyamides proviennent du polycaprolactame (PA-6) ou du polydodécalactame (PA-12). La quantité de polyétheresteramide est comprise entre 0,5 et 9 % en poids du mélange.

La propriété de ce film est de résister à la pliure à 0° C selon la méthode 101 c de la norme MIL-B-131 F. On mesure le nombre de trous produits au cours de 1 000 pliages.

Si la quantité de polyétheresteramide est trop faible, le perçage est important, si la quantité de polyétheresteramide est trop importante, on réduit la transparence et les propriétés mécaniques du film.

Dans cet art antérieur; le polyétheresteramide est tel que les proportions en poids des blocs polyamides et des blocs polyéthers sont dans le rapport 45/55 à 30/70.

Il est utile que les films de polyamide qu'on utilise dans l'industrie alimentaire présentent une bonne résistance au pliage notamment à basse température pour l'emballage des surgelés. Cependant, il est indispensable que les films pour emballer les produits surgelés (ou à surgeler) résistent à la perforation due aux parties saillantes ou aux arêtes vives de ces produits. Il est aussi utile qu'au cours du transport du produit surgelé et de sa manipulation, les dites parties saillantes et les arêtes vives ne provoquent pas un perçage du film.

Cette propriété est aussi recherchée pour l'emballage de matériel médical stérilisé. En effet, le perçage du film provoquerait une entrée d'air et donc une contamination. La demanderesse a trouvé que le test le plus représentatif de cette résistance était la résistance au choc, selon la norme ISO 7765-1 (Méthode B) d'un poinçon tombant d'une certaine hauteur sur le film.

La demanderesse a découvert des films à base de (i) polyamide constitué essentiellement de polyamide-6 ou de polyamide-6,6 et (ii) d'un polymère à blocs polyamides et blocs polyéther, les blocs polyamides étant constitués essentiellement de polyamide-6 ou de polyamide-6,6, les blocs polyéthers étant constitués essentiellement de polytétraméthylène glycol, le rapport polyamide/polyéther en poids de (ii) étant supérieur ou égal à 50/50.

Le principal avantage de ces films est de présenter une résistance à l'impact selon ISO 7765-1 (Méthode 3) supérieure à celle du film de polyamide.

L'art antérieur JP 04-314 741 cité plus haut a décrit des compositions proches, cependant, elles ne présentent pas une résistance suffisante à l'impact.

US 4 970 274 décrit des matières à mouler et des films de polyamide-6 contenant des polymères à blocs polyamides et blocs polyéthers. Cependant la combinaison des blocs polyamide-6 avec les blocs polytétraméthylène glycol (PTMG) n'est ni citée ni exemplifiée. La demanderesse a trouvé que cette combinaison procurait des résultats particuliers, à savoir une résistance à l'impact tout en conservant la résistance à la traction et à la déchirure d'un film de polyamide-6 (PA-6) ou polyamide-6,6 (PA-6,6). Les films de l'invention ont une structure de matrice polyamide dans laquelle sont dispersés de nodules de polymères à blocs polyamides et blocs polyéther.

Ces nodules sont inférieurs à 0,3 $\mu$m.

L'art antérieur US 4 970 274 montre que les compositions de polyamide ont été assouplies mais avec une perte des propriétés mécaniques telles que par exemple la résistance à la traction, alors que dans la présente invention on a amélioré la résistance à l'impact sans perte des autres propriétés.

Un autre avantage de l'invention est que le polyamide et le polymère à blocs polyamides et blocs polyéther se mélangent très facilement par exemple dans l'extrudeuse qui alimente la machine de production du film. Il suffit de préparer un simple mélange à sec au tonneau (ou dry blend) il n'est pas nécessaire d'effectuer un compoundage, avec ou sans mélange maître, avec des profils de vis particuliers.

Le polyamide-6 est le produit de condensation du caprolactame ou de l'acide amino caproïque, le polyamide-6,6 est le produit de condensation de l'acide adipique et de l'hexaméthylène diamine.

On ne sortirait pas du cadre de l'invention si le PA-6 ou le PÀ-6,6 contiennent de faibles quantités d'autres polyamides, c'est-à-dire moins de 30 % en poids. Ces autres polyamides peuvent être choisis parmi les produits de condensation :

- d'un ou plusieurs aminoacides, tels les acides aminocaproïque, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;

ou des mélanges de plusieurs de ces monomères ce qui conduit à des copolyamides tels que par exemple le PA-6,10, le PA-6,12.

Le polyamide (i) (PA-6 ou PA-6,6) peut aussi contenir dans sa chaîne de faibles quantités d'autre monomères de polyamides, c'est-à-dire moins de 30 % en poids.

Par exemple, le PA-6 peut contenir des motifs lauryllactame, isophtalique, téréphtalique, ou héxaméthylène diamine.

Par exemple, le PA-6,6 peut contenir des motifs caprolactame, lauryllactame, isophtalique ou téréphtalique.

Au sens de l'invention, le polyamide (i) désigne aussi des mélanges à matrice PA-6 ou PA-6,6 avec des polyoléfines.

De tels mélanges sont décrits dans le brevet US 5 342 886. On peut encore citer les mélanges de polyamides et de copolymères d'éthylène et d'acrylates d'alkyle. De tels mélanges sont par exemple décrits dans US 5 070 145 et EP 564 338.

Les polymères (ii) à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.

2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.

3) Séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent, par exemple, de la condensation d'acides alpha-oméga aminocarboxyliques ou de diacides carboxyliques et diamines en présence d'un diacide carboxylique limiteur de chaîne.

La masse molaire en nombre $\overline{M}_n$ des séquences polyamides est comprise entre 300 et 15 000 et de préférence entre 600 et 5 000. La masse $\overline{M}_n$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 250° C pour une concentration initiale de 0,8 g/100 ml.

Ces polymères à blocs polyamides et polyéthers sont décrits dans les brevets US 4 331 786, US 4 115 475, US 4 <195 015, US 4 839 441, US 4 864 014, US 4 230 838 et US 4 332 920.

Les blocs polyamide sont constitués essentiellement de PA-6 ou de PA-6,6 et comme les polyamides (i) ils peuvent comprendre d'autres polyamides en mélange ou d'autres motifs de polyamide dans leur chaîne. Les blocs polyéthers sont constitués des motifs $—O—(CH_2)_4—$, que ces blocs dans le polymère (ii) proviennent de la réaction de polyéther diamine sur des blocs polyamides à extrémités acides ou de la réaction de polyéthers diols sur des blocs polyamides à extrémités acides, on les appelle par simplification "blocs PTMG" (polytétraméthylène glycol ou polyoxytétraméthylène glycol).

Le polymère à blocs polyamides et blocs polyéthers est tel que le polyamide est le constituant majoritaire en poids, c'est-à-dire que la quantité de polyamide qui est sous forme de blocs et celle qui est éventuellement répartie de façon statistique dans la chaîne représente plus de 50 % en poids du polymère à blocs polyamide et blocs polyéther. Avantageusement, la quantité de polyamide et la quantité de polyéther sont dans le rapport (polyamide/polyéther) 50/50 à 95/5 et de préférence 60/40 à 75/25.

Le polymère (ii) peut aussi être un mélange de deux ou plusieurs polymères blocs polyamides et blocs polyéther.

Avantageusement, on choisit pour les blocs polyamides de (ii) le même polyamide que le polyamide (i) constituant le film.

Le film de l'invention peut être préparé par mélange du polyamide et du polymère à blocs polyamides et blocs polyéthers à l'état fondu suivi d'une extrusion soufflage ou d'une extrusion en filière plate et cylindre.

La quantité de polymère à blocs polyamide et polyéther est fonction de la résistance à l'impact qu'on recherche. La résistance à l'impact augmente avec la quantité. Cette quantité peut être jusqu'à 40 parties pour 100 parties de polyamide et avantageusement 5 et 30 parties pour 100 parties de polyamide.

La résistance au choc d'un film de polyamide d'épaisseur comprise entre 15 et 300 μm peut être multipliée par 1,1 et plus généralement par un facteur compris entre 1,2 et 2.

La demanderesse a découvert que les compositions pour fabriquer les films de l'invention peuvent être obtenus dans l'extrudeuse qui alimente le dispositif de fabrication du film. Il suffit d'alimenter l'extrudeuse avec le polyamide (i) et le polymère à blocs (ii) sans qu'il soit nécessaire de les malaxer auparavant ou de préparer un mélange maître de (ii) dans (i) puis de l'incorporer dans (i).

La demanderesse a découvert que le mélange majoritaire de polyamide et minoritaire de polymère à blocs polyamide et blocs polyéthers se présentait sous forme d'une matrice de polyamide et de nodules d'au plus 0,3 μm et avantageusement < à 0,2 de polymère à blocs polyamides et blocs polyéthers. Les nodules se dispersent très facilement, il n'est pas nécessaire d'utiliser des vis particulières, bi-vis ou des profils particuliers.

S'agissant des mélanges de PA-6 et de copolymère à blocs dérivant du caprolactame et blocs polyéthers, les nodules sont d'environ 0,1 μm.

On préfère les polymères à blocs dérivant du caprolactame et blocs polytétraméthylène glycol.

La demanderesse a aussi découvert que la transparence du film de polyamide n'était pas affectée par l'addition de polymère à blocs polyamide et blocs polyéther jusqu'à des taux de 30 parties pour 100 parties de polyamide, elle est même légèrement améliorée.

## *Exemple 1*

On a mesuré selon ISO 7765-1 (Méthode B) (hauteur d'impact du poinçon 152,4 cm) la résistance au choc d'un film de PA-6 contenant différentes proportions d'un polymère à blocs polyamide 6 de masse $\overline{M_n}$ 1 300 et blocs polyoxytetraméthylène glycol de masse $\overline{M_n}$ = 650. On appelle ce polymère à blocs PEBAX 1 dans la suite des exemples, sa dureté shore D est 55.

Le PA-6 est de Mi 2 à 3 (235° C - 2,16 kg - Ø = 2 mm). On observe des nodules de 0,1 μm dans une matrice PA-6.

Les essais sont faits sur un film de 55 μm conditionné 12 heures à 23° C dans une atmosphère à 50 % d'humidité relative.

Tableau 1 :

| Valeurs pour 50 % de casse | | | |
|---|---|---|---|
| PA-6 parties | PEBAX 1 parties | Poids(*) (grammes) | Transmittance à 700 (nm) |
| 100 | 0 | 600 à 700 | 81 % |
| 95 | 5 | 800 à 900 | 81 % |
| 90 | 10 | 800 à 900 | 83 % |
| 85 | 15 | 900 à 1 000 | 83 % |

(*) non compris le poids du poinçon : 345 g.

## *Exemple 2*

On mesure les propriétés mécaniques des films de l'exemple 1. Les résultats sont dans le tableau 2.

On constate que les propriétés mécaniques ne sont pas altérées par l'addition de PEBAX 1, alors qu'on aurait pu s'attendre à ce que le film soit trop extensible et trop élastique.

Tableau 2

## FILMS PA6/PEBAX 1

| | unités | PA 6 seul | PA 6 + 5% PEBAX 1 | PA 6 + 10% PEBAX 1 | PA 6 + 15% PEBAX 1 |
|---|---|---|---|---|---|
| **Résistance à la déchirure** (ENTAILLE) | | | | | |
| sens parallèle | cN | 64 | 74 | 220 | 98 |
| sens perpendiculaire | cN | 67 | 85 | 98 | 100 |
| **Essai de traction** | | | | | |
| *sens parallèle* | | | | | |
| déformation au seuil | % | 19 | 21 | 20 | 21 |
| contrainte au seuil | MPa | 31 | 26 | 29 | 28 |
| déformation rupture | % | 288 | 317 | 304 | 290 |
| contrainte rupture | MPa | 71 | 77 | 74 | 69 |
| *sens perpendiculaire* | | | | | |
| déformation au seuil | % | 12 | 11 | 13 | 14 |
| contrainte au seuil | MPa | 33 | 36 | 36 | 32 |
| déformation rupture | % | 300 | 295 | 314 | 305 |
| contrainte rupture | MPa | 67 | 58 | 63 | 54 |

5

**Revendications**

1. Films à base de :
(i) polyamide constitué de polyamide-6 ou de polyamide-6,6 et (ii) d'un polymère à blocs polyamides et blocs polyéthers, les blocs polyamides étant constitués de polyamide-6 ou de polyamide-6,6, les blocs polyéther étant constitués de polytétraméthylène glycol, ou de son dérivé obtenu par remplacement des extrémités OH par des extrémités $NH_2$, le rapport polyamide/polyéther en poids de (ii) étant compris entre 50/50 et 95/5 et le polymère à blocs polyamides et blocs polyéther (ii) étant sous forme de nodules inférieurs à 0,3 µm dispersés dans la matrice de polyamide (i).

2. Films selon la revendication 1 dans lesquels la résistance à l'impact selon ISO 7765-1 (Méthode B) est supérieure à celle du film de seul polyamide (i).

3. Films selon l'une des revendications 1 ou 2 dans lesquels le rapport polyamide / polyéther en poids de (ii) est compris entre 60/40 à 75/25.

4. Films selon l'une des revendications 1 à 3 dans lesquels la transparence mesurée par la transmittance à une longueur d'onde de 700 nm, est au moins égale à celle du film de seul polyamide (i).

**Claims**

1. Films based on:
(i) polyamide consisting of nylon-6 or nylon-6,6 and (ii) a polymer comprising polyamide blocks and polyether blocks, the polyamide blocks consisting of nylon-6 or of nylon-6,6, the polyether blocks consisting of polytetramethylene glycol or of its derivative obtained by replacing the OH end groups with $NH_2$ end groups, the polyamide/ polyether weight ratio of (ii) being between 50/50 and 95/5 and the polymer comprising polyamide blocks and polyether blocks (ii) being in the form of nodules of less than 0.3 µm dispersed in the matrix of polyamide (i).

2. Films according to Claim 1, in which the impact strength according to ISO 7765-1 (Method B) is greater than that of the film of polyamide (i) alone.

3. Films according to either of Claims 1 and 2, in which the polyamide/polyether weight ratio of (ii) is between 60/40 and 75/25.

4. Films according to one of Claims 1 to 3, in which the transparency measured by the transmittance at a wavelength of 700 nm is at least equal to that of the film of polyamide (i) alone.

**Patentansprüche**

1. Folien auf der Basis

(i) eines Polyamids, das aus Polyamid-6 oder Polyamid-6,6 besteht, und
(ii) eines Polymers mit Polyamidblöcken und Polyetherblöcken, wobei die Polyamidblöcke aus Polyamid-6 oder Polyamid-6,6 und die Polyetherblöcke aus Polytetramethylenglykol oder dessen Derivat bestehen, das erhalten wird, indem die endständigen OH-Gruppen durch endständige $NH_2$-Gruppen ersetzt werden, wobei das Gewichtsverhältnis Polyamid/Polyether des Polymers (ii) im Bereich von 50/50 bis 95/5 liegt und das Polymer (ii) mit Polyamidblöcken und Polyetherblöcken in Form von Kügelchen mit einem Durchmesser von weniger als 0,3 µm vorliegt, die in der Matrix aus dem Polyamid (i) dispergiert sind.

2. Folien nach Anspruch 1, wobei die Schlagzähigkeit nach der Norm ISO 7765-1 (Verfahren B) größer ist als die Schlagzähigkiet der Folie, die ausschließlich aus dem Polyamid (i) besteht.

3. Folien nach einem der Ansprüche 1 und 2, wobei das Gewichtsverhältnis Polyamid/Polyether des Polymers (ii) im Bereich von 60/40 bis 75/25 liegt.

4. Folien nach einem der Ansprüche 1 bis 3, wobei die Durchsichtigkeit, die durch Messung der Lichtdurchlässigkeit bei einer Wellenlänge von 700 nm ermittelt wird, mindestens so groß ist wie die Durchsichtigkeit einer Folie, die ausschließlich aus dem Polyamid (i) besteht.